(19) Europäisches Patentamt
European Patent Office
Office européen des brevets

(11) EP 2 197 938 B1

(12) **EUROPÄISCHE PATENTSCHRIFT**

(45) Veröffentlichungstag und Bekanntmachung des Hinweises auf die Patenterteilung:
**08.05.2013 Patentblatt 2013/19**

(21) Anmeldenummer: **08805019.0**

(22) Anmeldetag: **02.10.2008**

(51) Int Cl.:
***C08G 63/02*** *(2006.01)* ***C08G 83/00*** *(2006.01)*
***C10G 33/04*** *(2006.01)*

(86) Internationale Anmeldenummer:
**PCT/EP2008/063238**

(87) Internationale Veröffentlichungsnummer:
**WO 2009/047210 (16.04.2009 Gazette 2009/16)**

(54) **VERWENDUNG VON HYPERVERZWEIGTEN POLYESTERN ZUM SPALTEN VON ÖL-WASSER-EMULSIONEN**

USE OF HYPERBRANCHED POLYESTERS FOR SEPARATING OIL-IN-WATER EMULSIONS

UTILISATION DE POLYESTERS HYPERRAMIFIÉS POUR SÉPARER DES ÉMULSIONS HUILE DANS L'EAU

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **08.10.2007 EP 07118028**

(43) Veröffentlichungstag der Anmeldung:
**23.06.2010 Patentblatt 2010/25**

(73) Patentinhaber: **BASF SE**
**67056 Ludwigshafen (DE)**

(72) Erfinder:
- **BRUCHMANN, Bernd**
**67251 Freinsheim (DE)**
- **EICHHORN, Andreas**
**67158 Ellerstadt (DE)**
- **GUZMANN, Marcus**
**69242 Mühlhausen (DE)**
- **GASCHLER, Wolfgang**
**67063 Ludwigshafen (DE)**

(56) Entgegenhaltungen:
**EP-A- 0 074 619**
**WO-A-2004/020503**
**WO-A-2006/084816**
**WO-A-2007/039083**

EP 2 197 938 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft die Verwendung von nicht dendrimeren, hyperverzweigten Polyestern, welche alkyl- und/ oder alkenylsubstituierte Bernsteinsäureeinheiten umfassen, als Demulgatoren zum Spalten von Öl-Wasser-Emulsionen, ins-besondere von Rohölemulsionen, sowie nicht dendrimere, hyperverzweigte Polyester, welche alkyl- und/oder alkenylsubstituierte Bernsteinsäureeinheiten umfassen.

Erdöl fällt bei der Förderung in der Regel als relativ stabile Wasser-Öl-Emulsion an. Diese kann je nach Alter und Lagerstätte bis zu 90 Gew. % Wasser enthalten. Bei dem Wasser kann es sich einerseits um in der Lagerstätte bereits vorhandenes Wasser handeln, sowie andererseits um Wasser, welches im Zuge sekundärer und/oder tertiärer Erdölförderung durch Injektionsbohrungen in die Lagerstätte eingepresst wird. Im Wasser sind im Allgemeinen noch größere Mengen an Salzen gelöst, beispielsweise Alkali- oder Erdalkalimetallsalze, und weiterhin enthält die Emulsion üblicherweise auch Feststoffe, welche mit der Öl-Wasser-Emulsion aus dem Bohrloch ausgetragen werden. Stabilisiert werden die Wasser-Öl-Emulsionen durch natürliche, im Rohöl vorkommende Emulgatoren, wie beispielsweise Naphthensäuren. Sie können auch zusätzlich durch nicht natürlich vorkommende Emulgatoren stabilisiert sein, wie beispielsweise Tensiden, welche zur tertiären Erdölförderung in die Erdöllagerstätte eingebracht wurden, und nun mit dem so geförderten Öl wieder ausgetragen werden.

Wasser, Salze und Feststoffe müssen vor der Verarbeitung des Rohöls in der Raffinerie entfernt werden. Raffinerien verlangen häufig, dass der Wassergehalt des angelieferten Rohöls nicht mehr als 1 % betragen darf. Aus ökonomischen Gründen erfolgt das Entfernen des Wassers aus dem Rohöl noch am Ort der Förderung, um den unwirtschaftlichen Transport von Wasser zu vermeiden und Korrosionsprobleme zu verhindern oder zumindest zu minimieren.

Die Phasentrennung der Wasser-Öl-Emulsion soll dabei möglich schnell und möglichst vollständig erfolgen. Nur so können angesichts der großen Fördervolumina die Vorrichtungen zur Phasentrennung, wie beispielsweise Absetztanks, möglichst klein gehalten werden. Auf Förderplattformen auf See ist die Verwendung möglichst kleiner, kompakter Vorrichtungen zur Phasentrennung angesichts des begrenzten Platzes schon eine bautechnische Notwendigkeit, und generell erfordern natürlich kleine Anlagen geringere Investitionskosten als große Anlagen. Eine oft gestellte Anforderung ist es, dass die Phasentrennung nicht mehr als ca. 20 bis 30 min benötigen sollte.

Zur Beschleunigung der Phasentrennung ist es bekannt, Emulsionsspalter (Demulgatoren) einzusetzen. Emulsionsspalter sind grenzflächenaktiven Substanzen, die die Öl-Wasser-Grenzflächen beeinflussen und somit zu einer schnelleren Phasentrennung beitragen.

Die Trennung von Öl-Wasser-Emulsionen erfolgt häufig nach einem zweistufigen Verfahren mit jeweils unterschiedlichen Anforderungen. In einer ersten Stufe wird -wie oben geschildert- die geförderte Emulsion in eine Öl- und in eine Wasserphase gespalten. Hierbei verbleiben üblicherweise in der Ölphase noch geringe Restmengen Wasser. Solange der Wassergehalt unterhalb einer kritischen Grenze bleibt - Raffinerien verlangen häufig, dass der Wassergehalt des angeflieferten Rohöls nicht mehr als 1 % betragen darf- ist dies aber im Regelfalle unkritisch. Auch die Wasserphase kann noch geringe Mengen Restöl enthalten. Da ölhaltiges Wasser beim Überschreiten der Grenzwerte nicht ungereinigt entsorgt werden kann, schließt sich meistens noch ein Entölungsschritt (Deoiling) an, bei dem auch noch Restmengen von Öl aus der Wasserphase entfernt werden. Hierzu können auch Demulgatoren eingesetzt werden; in der Regel werden aber andere eingesetzt, als bei der eigentlichen Emulsionspaltung.

EP-A 0 264 841 beschreibt die Verwendung von linearen Copolymeren aus hydrophoben Acrylsäure- oder Methacrylsäureestern und hydrophilen ethylenisch ungesättigten Monomeren als Erdölemulsionsspalter.

EP-A 0 499 068 beschreibt die Herstellung von Reaktionsprodukten aus vinylischen Monomeren und Alkohol- oder Phenolalkoxylaten und deren Verwendung als Demulgatoren für Rohölemulsionen.

US 5,460750 beschreibt Reaktionsprodukte aus Phenolharzen und Alkylenoxiden als Emulsionsspalter für Rohölemulsionen.

EP-A 0 541 018 beschreibt Emulsionsspalter, hergestellt aus Polyethyleniminen mit einem gewichtmittleren Molekulargewicht von bis zu 35 000 g/mol und Ethylenoxid und Propylenoxid, wobei als zweite wirksame Komponente zusätzlich ein Alkylphenolformaldehydharz eingesetzt wird.

EP-A 0 784 645 beschreibt die Herstellung von Alkoxylaten von Polyaminen, speziell von Polyethyleniminen und Polyvinylaminen, und deren Verwendung als Rohölemulsionsspalter.

EP-A 0 267 517 offenbart verzweigte Polyaminoester als Demulgatoren. Die verzweigten Polyaminoester werden durch Umsetzung von alkoxylierten primären Aminen mit Triolen und Dicarbonsäuren erhalten.

Weiterhin sind dendrimere Polymere als Demulgatoren für Rohöl beschrieben worden.
US 4,507,466 und US 4,857,599 offenbaren dendrimere Polyamidoamine.
US 4,568,737 offenbart dendrimere Polyamidoamine sowie Hybrid-Dendrimere aus Polyamidoaminen, Polyestern und Polyethern, und deren Verwendung als Demulgatoren für Rohöl. DE 103 29 723 beschreibt die Herstellung von alkoxylierten, dendrimeren Polyestern und deren Verwendung als biologisch abbaubare Emulsionsspalter. Die verwendeten dendrimeren Polyester basieren auf einem mehrfach funktionellen Alkohol als Kernmolekül und einer Carbonsäure, die wenigstens zwei Hydroxylgruppen aufweist, als Aufbaukomponente. Die Herstellung von Dendrimeren erfolgt in vielstufigen Reaktionen und ist dementsprechend ist sehr aufwändig. Daher sind derartige Produkte sehr teuer und in großtechnischen Anwendungen kaum wirtschaftlich einsetzbar.

WO 2006/084816 beschreibt die Verwendung von hyperverzweigten Polymeren als Demulgatoren zum Spalten von Rohölemulsionen. Es werden verschiedene Typen von hyperverzweigten Polymeren offenbart, wie beispielsweise hyperverzweigte Polycarbonate, hyperverzweigte Polyether, hyperverzweigte Polyurethane, hyperverzweigte Polyamide, hyperverzweigte Polyester oder hyperverzweigte Polyesteramide. Als Baustein von hyperverzweigten Polyester und hyperverzweigte Polyesteramiden werden auch Bernsteinsäure, 2-Methylbernsteinsäure, 2-Ethylbernsteinsäure sowie 2-Phenylbernsteinsäure offenbart. Alkyl- und Alkylenbernsteinsäuren mit längeren Alkyl- bzw. Alkenylketten werden jedoch nicht offenbart.

Neben der Anforderung einer schnellen und vollständigen Trennung ist zu berücksichtigen, dass die Zusammensetzung des Erdöls von Ölfeld zu Ölfeld variieren kann und sich auch die Zusammensetzung der geförderten Öl-Wasser-Emulsion im Laufe der Zeit verändern kann. Es ist deswegen erforderlich, den Demulgator an die jeweilige Verwendung anzupassen. Häufig werden hierzu Mischungen verschiedener Demulgatoren eingesetzt.

Aufgabe der vorliegenden Erfindung war es, verbesserte Demulgatoren zur Spaltung von Öl-Wasser-Emulsionen, insbesondere von Rohölemulsionen, bereit zu stellen, mit denen eine schnellere Phasentrennung erreicht werden kann. Diese sollten einfach und kostengünstig herzustellen sein sowie nach dem Baukastenprinzip einfach an unterschiedliche Anforderungen angepasst werden können.

Gelöst wird die Aufgabe durch die Verwendung von nicht dendrimeren, hyperverzweigten Polyestern, welche als Monomerbausteine alkyl- und/oder alkenylsubstituierte Bernsteinsäureeinheiten umfassen als Demulgatoren zum Spalten von Öl-Wasser-Emulsionen, insbesondere zum Spalten von Rohölemulsionen.

Dementsprechend wurde die Verwendung von nicht-dendrimeren, hyperverzweigten Polyestern mindestens umfassend Dicarbonsäureeinheiten (A) sowie als weitere Einheiten mindestens trifunktionelle Alkohole (B1) zum Spalten von Öl-Wasser-Emulsionen, insbesondere von Rohölemulsionen, gefunden, wobei die Polymere als Dicarbonsäurebausteine substituierte Bernsteinsäureeinheiten **(I)**

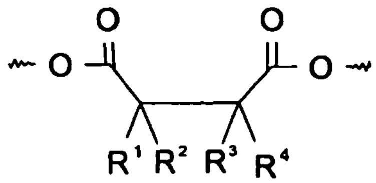

**(I)**

umfassen, wobei $R^1$, $R^2$, $R^3$ und $R^4$ unabhängig voneinander für H, einen $C_3$ bis $C_{40}$-Alkylrest oder einen $C_3$ bis $C_{40}$-Alkenylrest stehen, mit der Maßgabe, dass mindestens einer der Reste $R^1$, $R^2$, $R^3$ und $R^4$ nicht für H steht und dass es sich bei den mindestens trifunktionellen Alkoholen (B1) um tri- oder höherfuntionelle Polyetherole, ausgewählt aus der Gruppe von Glycerin, Diglycerin, Triglycerin, Trimethylolethan, Trimethylolpropan, 1,2,4-Butantriol oder Pentaerythrit handelt, wobei die besagten Alkohole im Mittel jeweils mit 1 bis 50 Ethylenoxid- und/oder Propylenoxideinheiten alkoxyliert sind.

Weiterhin wurden die entsprechenden nicht dendrimeren, hyperverzweigten Polyester der obigen Formeln gefunden.

Zu der Erfindung ist im Einzelnen das Folgende auszuführen:

Zur Ausführung der Erfindung werden hyperverzweigte Polyester als Demulgatoren eingesetzt.

Dendrimere und hyperverzweigte Polymere sind Bezeichnungen für Polymere, die sich durch eine stark verzweigte Struktur und eine hohe Funktionalität auszeichnen. Zwischen Dendrimeren und hyperverzweigten Polymeren bestehen aber dennoch deutliche Unterschiede im Aufbau.

Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder mehrfach funktionellen Monomeren mit jedem bereits gebundenen Monomer herstellen. Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung der monodispersen Dendrimere dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Im Gegensatz dazu sind hyperverzweigte Polymere sowohl molekular wie strukturell uneinheitlich, d.h. die Moleküle des Polymers weisen sowohl eine Verteilung hinsichtlich des Molekulargewichtes wie hinsichtlich der Struktur der Moleküle auf. Sie werden durch einen nicht-generationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf.

Zur Synthese von hyperverzweigten Polymeren eignen sich insbesondere so genannte $AB_x$-Monomere. Diese weisen zwei verschiedene funktionelle Gruppen A und B in einem Molekül auf, die unter Bildung einer Verknüpfung intermolekular miteinander reagieren können. Die funktionelle Gruppe A ist dabei nur einmal pro Molekül enthalten und die funktionelle Gruppe B zweifach oder mehrfach. Durch die Reaktion der besagten $AB_x$-Monomere miteinander entstehen unvernetzte Polymere mit regelmäßig angeordneten Verzweigungstellen. Die Polymere weisen an den Kettenenden fast ausschließlich B-Gruppen auf.

Weiterhin lassen sich hyperverzweigte Polymere über die $A_x$ + By- Syntheseroute herstellen. Darin stehen $A_x$ und $B_y$ für zwei unterschiedliche Monomere mit den funktionellen Gruppen A und B und die Indices x und y für die Anzahl der funktionellen Gruppen pro Monomer. Bei der $A_x$ + $B_y$-Synthese, dargestellt hier am Beispiel einer $A_2$ + $B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hyperverzweigten Polymer reagieren kann. Auch die so erhaltenen hyperverzweigten Polymere weisen überwiegend B-Gruppen als Endgruppen auf.

Die erfindungsgemäß verwendeten, nicht-dendrimeren, hyperverzweigten Polymere unterscheiden sich von dendrimeren Polymeren deutlich im Verzweigungsgrad. Der Verzweigungsgrad DB (degree of branching) der betreffenden Polymere ist definiert als

$$DB\ (\%) = \frac{T+Z}{T+Z+L} \times 100,$$

wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Polymere bedeuten. Zur Definition des "Degree of Branching" siehe auch H. Frey et al., Acta Polym. 1997, 48, 30.

Das Merkmal "hyperverzweigt" im Zusammenhang mit den Polymeren bedeutet im Sinne der Erfindung, dass der Verzweigungsgrad DB 10 bis 95 %, bevorzugt 25 - 90 % und besonders bevorzugt 30 bis 80 % beträgt.

Ein Dendrimer hingegen weist die maximal mögliche Anzahl an Verzweigungsstellen auf, welche nur durch einen hochsymmetrischen Aufbau erreicht werden kann. "Dendrimer" sind im Zusammenhang mit der vorliegenden Erfindung die Polymere hingegen dann, wenn ihr Verzweigungsgrad DB = 99 - 100 % beträgt. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Erfindungsgemäß werden hyperverzweigte Polyester als Demulgatoren verwendet, also nicht-dendrimere Polymere im Sinne der obigen Definition, d.h. molekular und strukturell uneinheitliche Polymere. Die Polyester weisen in bekannter Art und Weise Ester-Verknüpfungen auf. Die Polymere umfassen als Bausteine jeweils mindestens eine Dicarbonsäureeinheit (A) sowie mindestens einen trifunktionellen Alkohol (B1). Sie können darüber hinaus weitere Bausteine umfassen.

Die erfindungsgemäß als Demulgatoren verwendeten hyperverzweigten Polyester umfassen als Dicarbonsäurebausteine substituierte Bernsteinsäureeinheiten **(I)**

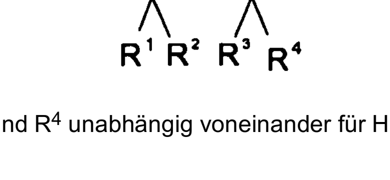 (I)

Hierbei stehen $R^1$, $R^2$, $R^3$ und $R^4$ unabhängig voneinander für H, einen $C_3$ bis $C_{40}$-Alkylrest oder einen $C_3$ bis

$C_{40}$-Alkenylrest, mit der Maßgabe, dass mindestens einer der Reste $R^1$, $R^2$, $R^3$ und $R^4$ nicht für H steht. Bevorzugt handelt es sich um Alkenylreste.

Die Alkylreste können linear oder verzweigt sein. Bevorzugt handelt es sich um $C_4$ bis $C_{30}$-Reste, besonders bevorzugt $C_6$ bis $C_{28}$-Reste, ganz besonders bevorzugt $C_8$ -bis $C_{26}$-Reste und beispielsweise um $C_{10}$ bis $C_{20}$-Reste. Besonders bevorzugt sind die Alkylketten linear. Beispielsweise kann es sich um Butyl-, Pentyl-, Hexyl-, Heptyl-, Octyl-, Decyl-, Dodecyl-, Tetradecyl-, Hexadecyl-, Octadecyl- oder Isooctadecylreste handeln, bevorzugt handelt es sich um Decyl-, Dodecyl-, Tetradecyl-, Hexadecyl-, Octadecyl- oder Isooctadecylreste. Falls die Reste verzweigt sind, sollte bevorzugt nicht mehr als eine Verzweigung pro 3 C-Atome des Restes vorhanden sein, besonders bevorzugt nicht mehr als eine Verzweigung pro 4 C-Atome des Restes.

Alkenylreste weisen eine oder auch mehrere Doppelbindungen auf. Bevorzugt handelt es sich um Alkenylreste mit einer Doppelbindung. Die Alkenylreste können linear oder verzweigt sein. Falls die Reste verzweigt sind, sollte bevorzugt nicht mehr als eine Verzweigung pro 3 C-Atome des Restes vorhanden sein, bevorzugt nicht mehr als eine Verzweigung pro 4 C-Atome des Restes. Bevorzugt handelt es sich um $C_4$ bis $C_{30}$-Reste, besonders bevorzugt $C_6$ bis $C_{28}$-Reste, ganz besonders bevorzugt $C_8$ -bis $C_{26}$-Reste und beispielsweise um $C_{10}$ bis $C_{20}$-Reste.

Bevorzugt kann es sich bei den Alkenylresten um n- oder iso-Hexenyl- , n- oder iso-Heptenyl-, n- oder iso-Octenyl-, n- oder iso-Octadienyl-, n- oder iso-Nonenyl-, n- oder iso-Decenyl-, n- oder iso-Dodecenyl-, n- oder iso-Tetradecenyl-, n- oder iso-Hexadecenyl-, n- oder iso-Octadecenyl- oder Tetrapropenylreste handeln.

Besonders bevorzugt handelt es sich bei den Alkenylresten um n- oder iso-Octenyl-, n-oder iso-Dodecenyl-, n- oder iso-Tetradecenyl-, n- oder iso-Hexadecenyl-, n- oder iso-Octadecenyl oder Tetrapropenylreste.

Bevorzugt stehen zwei oder drei der Reste $R^1$, $R^2$, $R^3$ oder $R^4$ für H und besonders bevorzugt stehen drei der Reste für H, d.h. die Bernsteinsäureeinheit weist nur eine Alkyl- oder Alkenylgruppe auf. Der eine Substituent kann sich in Position $R^1$ oder $R^3$ befinden.

Zur Synthese der hyperverzweigten Polyester kann in der beschriebenen Art und Weise substituierte Bernsteinsäure eingesetzt werden. Bevorzugt kann die Bernsteinsäure aber in Form aktivierter Derivate, insbesondere in Form von Halogeniden, Estern oder Anhydriden eingesetzt werden.

Derivate sind insbesondere die betreffenden Anhydride in monomerer oder auch polymerer Form, Mono- oder Dialkylester, bevorzugt Mono- oder Di-$C_1$-$C_4$-alkylester, besonders bevorzugt Mono- oder Dimethylester oder die entsprechenden Mono- oder Diethylester, ferner Mono- und Divinylester sowie gemischte Ester, bevorzugt gemischte Ester mit unterschiedlichen $C_1$-$C_4$-Alkylkomponenten, besonders bevorzugt gemischte Methylethylester.

Besonders bevorzugt werden Bernsteinsäureanhydride als Ausgangsmaterial eingesetzt. Neben der hohen Reaktivität der Anhydride hat der Einsatz der Anhydride den Vorteil, dass Alkenylbernsteinsäureanhydride durch Umsetzen von Maleinsäureanhydrid mit Olefinen, welche in der Allylstellung ein H-Atom aufweisen (die so genannte en-Reaktion), besonders einfach und kostengünstig hergestellt werden können. Durch Umsetzung von linearen $\alpha$-Olefinen können Alkenylbernsteinsäureanhydride mit n-Alkenylresten erhalten werden, isomerisierte Olefine mit nicht endständigen Doppelbindungen ergeben mit iso-Alkenylresten substituierte Bernsteinsäureanhydride. Als Olefine können auch reaktive Oligo- oder Polyolefine eingesetzt werden, wobei bevorzugt keine reaktiven Polyisobutene eingesetzt werden. Die Herstellung von Alkenylbernsteinsäureanhydriden (auch als ASA bekannt) mittels der en-Reaktion ist beispielsweise in WO 97/23474 oder DE 195 19 042 sowie der darin zitierten Literatur ausführlich dargestellt.

Bevorzugt eingesetzte, mit Alkenylgruppen substituierte Bernsteinsäureanhydride sind n- oder iso-Hexenylbernsteinsäureanhydrid, n- oder iso-Heptenylbernsteinsäureanhydrid, n- oder iso-Octenylbernsteinsäureanhydrid, n- oder iso-Octadienylbernsteinsäureanhydrid, n- oder iso-Nonenylbernsteinsäureanhydrid, n- oder iso-Decenylbernsteinsäureanhydrid, n- oder iso-Dodecenylbernsteinsäure-anhydrid (DDSA), n- oder iso-Tetradecenylbernsteinsäureanhydrid, n- oder iso-Hexadecenylbernsteinsäureanhydrid, n- oder iso-Octadecenylbernsteinsäureanhydrid, Tetrapropenylbernsteinsäureanhydrid, 2-Dodecenyl-3-tetradecenylbensteinsäure-anhydrid. Selbstverständlich können auch Gemische verschiedener substituierter Anhydride eingesetzt werden.

Besonders bevorzugte Produkte sind n- oder iso-Octenylbernsteinsäureahnydrid, n- oder iso-Dodecenylbernsteinsäureanhydrid (DDSA), n- oder iso-Tetradecenylbernsteinsäureanhydrid, n- oder iso-Hexadecenylbernsteinsäureanhydrid, n- oder iso-Octadecenylbernsteinsäureanhydrid, Tetrapropenylbernsteinsäureanhydrid oder Gemische der genannten Produkte.

Die Alkenylbernsteinsäuren oder Derivate oder deren Gemische können auch in Mischung mit Alkylbernsteinsäuren oder deren Derivaten eingesetzt werden.

Zur Herstellung der erfindungsgemäß verwendeten hyperverzweigten Polyester werden die alkyl- und/oder alkenylsubstituierten Bernsteinsäuren (A1) bzw. deren Derivate mit

a) mindestens einem mindestens trifunktionellen aliphatischen, cycloaliphatischen, araliphatischen oder aromatischen Alkohol (B1),

umgesetzt, wobei man das Verhältnis der reaktiven Gruppen im Reaktionsgemisch so wählt, dass sich ein molares Verhältnis von OH-Gruppen und/oder Aminogruppen zu Carboxylgruppen bzw. deren Derivaten von 5:1 bis 1:5,

vorzugsweise von 4:1 bis 1:4, besonders bevorzugt von 3:1 bis 1:3 und ganz besonders bevorzugt von 2:1 bis 1:2 einstellt.

Bei den mindestens trifunktionellen Alkoholen (B1) handelt es sich um tri- oder höherfunktionelle Polyetherole, welche in prinzipiell bekannter Art und Weise durch Alkoxylierung von tri- oder höherfunktionellen Alkoholen mit Ethylenoxid, und/oder Propylenoxid erhalten werden können. Bevorzugt kann die Alkoxylierung mit Ethylenoxid oder einem Gemisch von Ethylenoxid und Propylenoxid erfolgen. Bei den gemischt ethoxylierten/propoxylierten Polyetherolen kann es sich um Copolymere handeln, bei denen die Ethylenoxideinheiten statistisch in der Kette verteilt sind oder es kann sich um Blockcopolymere handeln. Über die Anzahl sowie die Auswahl der Alkylenoxideinheiten, insbesondere von Ethylenoxideinheiten lässt sich die Hydrophilie der hyperverzweigten Polyester steuern. Während die alkyl- bzw. alkenylsubstituierten Bernsteinsäureeinheiten naturgemäß hydrophoben Charakter haben, lassen sich durch die Auswahl alkoxylierter Alkohole, insbesondere ethoxylierter Alkohole hydrophile Molekülteile einbauen.

Erfindungsgemäß handelt es sich um trifunktionelle Polyetherole auf Basis von Glycerin, Diglycerin, Triglycerin, Trimethylolethan, Trimethylolpropan, 1,2,4-Butantriol oder Pentaerythrit, welche im Mittel mit 1 bis 50 Ethylenoxid- und/oder Propylenoxideinheiten alkoxyliert sind. Bevorzugt handelt es sich bei mindestens 50% der Alkylenoxideinheiten um Ethylenoxideinheiten und bevorzugt werden nur Ethylenoxideinheiten eingesetzt. Bevorzugt beträgt die mittlere Zahl der Ethylenoxid- und/oder Propylenoxideinheiten pro Startermolekül 2 bis 40, besonders bevorzugt 3 bis 30 und ganz besonders bevorzugt 4 bis 25. Besonders bevorzugt sind Polyetherole auf Basis von Glycerin und Trimethylolpropan, welche im Mittel jeweils 4 bis 25 Ethylenoxideinheiten aufweisen.

Neben den genannten Komponenten können optional noch weitere Komponenten zur Synthese der erfindungsgemäß verwendeten hyperverzweigten Polymere eingesetzt werden. Mit solchen Komponenten lassen sich die Eigenschaften der Polymere beeinflussen und optimal für den gewünschten Zweck anpassen.

So können neben der alkyl- und/oder alkenylsubstituierten Bernsteinsäure (A1) oder ihrer Derivate weitere di- oder polyfunktionelle Carbonsäure (A2) eingesetzt werden. Beispiele weiterer Carbonsäure umfassen Malonsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure bzw. Derivate davon, insbesondere deren Anhydride oder Ester. Die Menge derartiger weiterer Carbonsäuren sollte aber im Regelfalle 50 mol % bzgl. der Menge aller eingesetzten Carbonsäuren (A) zusammen nicht überschreiten. Bevorzugt beträgt die Menge alkyl- und/oder alkenylsubstituierten Bernsteinsäure (A1) mindestens 75 mol %, besonders bevorzugt mindestens 90 mol % und ganz besonders bevorzugt werden nur alkyl- und/oder alkenylsubstituierte Bernsteinsäuren (A1) eingesetzt.

Weiterhin können neben den Komponenten (B1) auch noch difunktionelle aliphatische, cycloaliphatische, araliphatische oder aromatische Alkohole (B3) eingesetzt werden. Durch die geeignete Auswahl zweiwertiger Alkohole können die Eigenschaften der Polyester bzw. Polyesteramide beeinflusst werden.

Beispiele von Diolen (B3) umfassen Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylenpolypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diols sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol Polyethylenglykole $HO(CH_2CH_2O)_n$-H oder Polypropylenglykole $HO(CH[CH_3]CH_2O)_n$-H, wobei n eine ganze Zahl und $n \geq 4$ ist, Polyethylen-polypropylenglykole, wobei die Abfolge der Ethylenoxid- der Propylenoxid-Einheiten blockweise oder statistisch sein kann, oder Polytetramethylenglykole, vorzugsweise bis zu einem Molgewicht bis zu 5000 g/mol.

Die zweiwertigen Alkohole (B3) können optional noch weitere Funktionalitäten wie beispielsweise Carbonyl-, Carboxy-, Alkoxycarbonyl- oder Sulfonyl-Funktionen enthalten, wie beispielsweise Dimethylolpropionsäure oder Dimethylolbuttersäure, sowie deren $C_1$-$C_4$-Alkylester, Glycerinmonostearat oder Glycerinmonooleat.

Die Menge derartiger weiterer zweiwertiger Alkohole (B3) sollte aber im Regelfalle 50 mol % bzgl. der Menge aller eingesetzten Alkohole bzw. Aminoalkohole (A) zusammen nicht überschreiten. Bevorzugt beträgt die Menge an zweiwertigen Alkoholen (B3) maximal 45 mol %, besonders bevorzugt maximal 40 mol % und ganz besonders bevorzugt

werden nur die Komponenten (B1) bzw. (B2) eingesetzt.

Die Umsetzung aller Komponenten (A) und (B) kann in Gegenwart oder Abwesenheit eines Lösemittels durchgeführt werden. Als Lösemittel geeignet sind beispielsweise Kohlenwasserstoffe wie Paraffine, Aromaten, Ether und Ketone. Vorzugsweise wird die Reaktion aber frei von Lösungsmittel durchgeführt.

Die Umsetzung erfolgt in der Regel bei erhöhten Temperaturen, beispielsweise 30 bis 250°C, insbesondere 80 bis 220°C und besonders bevorzugt 80 bis 180°C.

Das während der Polymerisation (Polykondensation) gebildete Wasser bzw. die Alkohole sollten mittels geeigneter Maßnahmen aus dem Reaktionsmedium entfernt werden. Die Umsetzung kann beispielsweise in Gegenwart eines Wasser entziehenden Mittels als Additiv erfolgen, das man zu Beginn der Reaktion zusetzt. Geeignet sind beispielsweise Molekularsiebe, insbesondere Molekularsieb 4Å, wasserfreies $MgSO_4$ oder wasserfreies $Na_2SO_4$. Weiterhin kann während der Reaktion gebildetes Wasser bzw. Alkohole abdestillieren. Dies kann auch mittels eines geeigneten Schleppmittels unter Verwendung eines Wasserabscheiders erfolgen. Bevorzugt kann das Abdestilieren unter vermindertem Druck erfolgen, beispielsweise bei einem Druck von 1 mbar bis 500 mbar.

Man kann die Umsetzung in Abwesenheit von Katalysatoren durchführen. Vorzugsweise arbeitet man jedoch in Gegenwart von mindestens einem Katalysator. Die sind bevorzugt saure anorganische, metallorganische oder organische Katalysatoren oder Gemische aus mehreren sauren anorganischen, metallorganischen oder organischen Katalysatoren.

Als saure anorganische Katalysatoren im Sinne der vorliegenden Erfindung sind beispielsweise Schwefelsäure, Sulfate und Hydrogensyulfate, wie Natriumhydrogensulfat, Phosphorsäure, Phosphonsäure, hypophosphorige Säure, Aluminiumsulfathydrat, Alaun, saures Kieselgel ($pH \leq 6$, insbesondere $\leq 5$) und saures Aluminiumoxid zu nennen. Weiterhin sind beispielsweise Alumiumverbindungen der allgemeinen Formel $Al(OR^1)_3$ und Titanate. Bevorzugte saure metallorganische Katalysatoren sind beispielsweise Dialkylzinnoxide oder Dialkylzinnester. Bevorzugte saure organische Katalysatoren sind saure organische Verbindungen mit beispielsweise Phosphatgruppen, Sulfonsäuregruppen, Sulfatgruppen oder Phosphonsäuregruppen. Man kann auch saure Ionentauscher als saure organische Katalysatoren einsetzen.

Falls ein Katalysator verwendet wird, beträgt seine Menge üblicherweise 1 bis 5000 und bevorzugt 10 bis 1000 Gew.-ppm, bezogen auf die Summe aller Komponenten (A) und (B).

Die Reaktionsdauer beträgt üblicherweise 5 Minuten bis 48 Stunden, bevorzugt 30 min bis 24 Stunden und besonders bevorzugt 1 Stunde bis 10 Stunden.

Das Ende der Umsetzung kann man oftmals daran erkennen, dass die Viskosität der Reaktionsmischung plötzlich schnell anzusteigen beginnt. Beim beginnenden Viskositätsanstieg kann man die Reaktion abstoppen, beispielsweise durch Abkühlen. Danach kann man an einer Probe der Mischung die Carboxylgruppenanzahl im (Prä)polymer bestimmen, beispielsweise durch Titration der Säurezahl nach DIN 53402-2.

Bei der Umsetzung der Monomere bilden sich je nach der Art der eingesetzen Monomere Esterbindungen bzw. Amidbindungen aus. Die erhaltenen hyperverzweigten Polyester bzw. Polyesteramide sind im Wesentlichen unvernetzt. Im Wesentlichen unvernetzt im Rahmen dieser Erfindung bedeutet, dass ein Vernetzungsgrad von weniger als 15 Gew.-%, bevorzugt von weniger als 10 Gew.-%, bestimmt über den unlöslichen Anteil des Polymeren, vorhanden ist. Der unlösliche Anteil des Polymeren wurde bestimmt durch vierstündige Extraktion mit dem gleichen Lösungsmittel, wie es für die Gelpermeationschromatographie verwendet wird, also Tetrahydrofuran, Dimethylacetamid oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Die Herstellung der Polymere kann bevorzugt diskontinuierlich, aber auch kontinuierlich durchgeführt werden, beispielsweise in Rührbehältern, Rohrreaktoren, Turmreaktoren oder anderen üblichen Reaktoren, die mit statischen oder dynamischen Mischern, und üblichen Vorrichtungen zur Druck- und Temperaturkontrolle sowie zum Arbeiten unter Inertgas, ausgestattet sein können.

Beim Arbeiten ohne Lösungsmittel erhält man in der Regel unmittelbar das Endprodukt, das erforderlichenfalls durch übliche Reinigungsoperationen gereinigt werden kann. Sofern ein Lösungsmittel mitverwendet wurde, kann dieses nach der Umsetzung in üblicher Weise aus der Reaktionsmischung entfernt werden, etwa durch Vakuumdestillation.

Die Herstellung zeichnet sich durch ihre große Einfachheit aus. Es ermöglicht die Herstellung von hyperverzweigten Polyestern in einer einfachen Ein-Topf-Reaktion. Die Isolierung oder Reinigung von Zwischenstufen oder Schutzgruppen für Zwischenstufen sind nicht erforderlich.

Weitere Einzelheiten zur Herstellung von hyperverzweigten Polyestern sind beispielsweise in WO 01/46296, DE 101 63 163, DE 102 19 508,

DE 102 40 817 oder WO 99/16810 dargestellt.

Als Demulgatoren bewährt haben sich hyperverzweigte Polyester mit einem gewichtsmittleren Molekulargewicht $M_w$ von 1000 bis 500000 g/mol, bevorzugt von 2000 bis 300000 g/mol, besonders bevorzugt von 5000 bis 250000 g/mol und insbesondere von 10000 bis 200000 g/mol.

Die Polydispersität der erfindungsgemäß verwendeten Polyester beträgt im Allgemeinen 1,2 bis 50, bevorzugt

1,4 bis 40, besonders bevorzugt 1,5 bis 30 und ganz besonders bevorzugt 2 bis 30. Die Angaben zur Polydispersität sowie zum zahlenmittleren und gewichtsmittleren Molekulargewicht $M_n$ und $M_w$ beziehen sich hier auf gelpermeationschromatographische Messungen, wobei Polymethylmethacrylat als Standard und Tetrahydrofuran, Dimethylacetamid oder Hexafluorisopropanol als Elutionsmittel verwendet wurden. Die Methode ist im Analytiker Taschenbuch Bd. 4, Seiten 433 bis 442, Berlin 1984 beschrieben.

Die Art der terminalen Gruppen kann durch das Verhältnis der eingesetzten Monomere beeinflusst werden. Sollen überwiegend OH-termierte Polymere erhalten werden, so sollten die Alkohole im Überschuss eingesetzt werden. Sollen überwiegend COOHterminierte Polymere erhaltern werden, so sollten die Carbonsäuren im Überschuss eingesetzt werden.

Die erfindungsgemäß verwendeten hyperverzweigten Polyester weisen im Regelfalle mindestens 4 funktionelle Gruppen auf. Die Zahl der funktionellen Gruppen ist prinzipiell nicht nach oben beschränkt. Allerdings weisen Produkte mit einer zu hohen Anzahl von funktionellen Gruppen häufig unerwünschte Eigenschaften auf, wie beispielsweise schlechte Löslichkeit oder eine sehr hohe Viskosität. Daher weisen die erfindungsgemäß verwendeten hyperverzweigten Polymere im Regelfalle nicht mehr als 100 funktionelle Gruppen auf. Bevorzugt weisen die hyperverzweigten Polymere 8 bis 30 und besonders bevorzugt 8 bis 20 funktionelle Gruppen auf.

Die in den hyperverzweigten Polyestern ursprünglich vorhandenen COOH-, und/oder OH-Gruppen können durch polymeranaloge Umsetzung mit geeigneten Verbindungen umfunktionalisiert werden. Auf diese Art und Weise lassen sich die Polyester bzw. Polysteramide an den jeweils gewünschten Verwendungszweck anpassen.

Die Umfunktionalisierung der hyperverzweigten Polyester kann während der Herstellung der Polymere, unmittelbar im Anschluss an die Polymerisationsreaktion oder in einer separaten Reaktion erfolgen.

Gibt man vor oder während des Polymeraufbaus Komponenten zu, die neben COOH-, oder OHGruppen weitere funktionelle Gruppen aufweisen, so erhält man ein hyperverzweigtes Polymer mit statistisch verteilten weiteren, von den ursprünglichen Gruppen verschiedenen funktionellen Gruppen.

Zur nachträglichen Umfunktionalisierung können mindestens difunktionelle Verbindungen eingesetzt werden, die einerseits die gewünschte, neu einzuführende funktionelle Gruppe sowie eine zweite Gruppe enthalten, die mit den ursprünglichen Gruppen des als Ausgangsmaterial verwendeten hyperverzweigten Polyesters unter Bildung einer Bindung zur Reaktion befähigt ist. Ein Beispiel dafür ist die Umsetzung einer OH-Gruppe mit einem Alkyl- oder Arylisocyanat zur Generierung hydrophober Gruppen oder die Umsetzung einer COOH-Gruppe mit einer Epoxyverbindung, zum Beispiel Glycidylmethacrylat, unter Bildung einer reaktionsfähigen acrylischen Doppelbindung.

Beispiele für geeignete funktionelle Gruppen, die mittels geeigneter Reaktionspartner eingeführt werden können, umfassen insbesondere saure oder basische, H-Atome aufweisende Gruppen sowie deren Derivate, wie -OC(O)OR, -COOH, -COOR, -CONHR, $-CONH_2$,-OH, -SH, $-NH_2$, -NHR, $-NR_2$, $-SO_3H$, - $SO_3R$, -NHCOOR, $-NHCONH_2$, -NHCONHR, ohne dass die Aufzählung darauf beschränkt sein soll. Gegebenenfalls können die funktionellen Gruppen auch mit Hilfe geeigneter Säuren oder Basen in die entsprechenden Salze übergeführt werden. Bei den Resten R der besagten Gruppen handelt es sich im Regelfalle um geradkettige oder verzweigte Alkylreste oder um Arylreste, die auch noch weiter substituiert sein können. Beispielsweise handelt es sich um $C_1$-$C_{30}$-Alkylreste oder um $C_5$-$C_{12}$-Arylreste. Es können auch andere funktionelle Gruppen wie beispielsweise -CN oder -OR verwendet werden.

Für die Verwendung der hyperverzweigten Polymere als Demulgatoren kann es vorteilhaft sein, wenn hydrophile und hydrophobe Molekülteile in einem bestimmten Verhältnis zueinander stehen. Das Verhältnis kann einerseits durch die Auswahl der eingesetzten Monomere beeinflusst werden.

Zu Hydrophobierung können zum Beispiel di- oder höherfunktionelle, hydrophobe Gruppen aufweisende Monomere in die Polyester bzw. Polyesteramide einpolymerisiert werden. Hierzu können beispielsweise di- oder höherfunktionelle Alkohole, di- oder höherfunktionelle Amine oder di- oder höherfunktionelle Carbonsäuren verwendet werden. Beispiele für derartige Monomere umfassen Alkohole, wie Hexandiol, Octandiol, Decandiol, Dodecandiol, Octadecandiol, Amine, wie Hexamethylendiamin, Octandiamin, Dodecandiamin oder Säuren wie Adipinsäure, Octandisäure, Dodecandisäure oder Octadecandisäure.

Die Hydrophobierung kann aber auch nachträglich erfolgen, indem man monofunktionelle hydrophobe Verbindungen einsetzt, mit der vorhandene reaktive Gruppen vor, während oder nach der Polymerisation modifiziert werden. So können die erfindungsgemäßen Polymere zum Beispiel durch Umsetzung mit monofunktionellen, gesättigten oder ungesättigten aliphatischen oder aromatischen Aminen, Alkoholen, Carbonsäuren, Epoxiden oder Isocyanaten hydrophobiert werden.

Die Hydrophilie der verwendeten Polyester kann gesteigert werden, indem zum Beispiel terminale Hydroxy-Gruppen durch Umsetzung mit Alkylenoxiden, insbesondere Ethylenoxid nachträglich umgesetzt werden. Weiterhin kann die Hydrophilie durch die bereits oben beschriebene Verwendung von Polyetherpolyolen als Monomer gesteigert werden.

Es können auch hyperverzweigte Polyester synthetisiert werden, die verschiedenartige Funktionalitäten aufweisen. Dies kann beispielsweise durch Umsetzung mit einem Gemisch verschiedener Verbindungen zur Umfunktionalisierung erfolgen, oder auch dadurch, dass man nur einen Teil der ursprünglich vorhandenen funktionellen Gruppen

umsetzt. Weiterhin lassen sich gemischt funktionelle Verbindungen dadurch erzeugen, indem man Monomere vom Typ ABC oder $AB_2C$ für die Polymerisation einsetzt, wobei C eine funktionelle Gruppe darstellt, die unter den gewählten Reaktionsbedingungen mit A oder B nicht reaktiv ist.

Schon aufgrund des Gehaltes an Alkyl- und Alkenylbernsteinsäuren sind die hyperverzweigten Polyester biologisch abbaubar. Die biologische Abbaubarkeit kann im Regelfalle gesteigert werden, indem man bei weiteren verwendeten Monomerbausteinen auf solche Monomere zurückgreift, von denen eine biologische Abbaubarkeit bekannt ist oder von denen eine biologische Abbaubarkeit angenommen werden kann. Geeignete weitere Monomere umfassen Glycerin, Glycerinalkoxylate, Ethylenglykol, Stearylalkohol, Oleylalkohol, Ricinusöl und oder deren Derivate, gegebenenfalls in Kombination mit Oxalsäure, Malonsäure, Bernsteinsäure, Milchsäure, Weinsäure, Adipinsäure, Stearinsäure, Ölsäure, Linolsäure, Linolensäure oder Ricinolsäure, ohne dass die Aufzählung auf diese Produkte beschränkt sein soll.

Die hergestellten, hyperverzweigten Polyester werden erfindungsgemäß zum Spalten von Öl-Wasser-Emulsionen, insbesondere von Rohölemulsionen verwendet. Bei den Öl-Wasser-Emulsionen kann es sich sowohl um Wasser-in-Öl oder um Öl-in-Wasser-Emulsionen handeln. Die Öl-Wasser-Emulsionen können beispielsweise 0,1 bis 99 Gew. % Wasser beziehungsweise Salzwasser enthalten. Bevorzugt können die erfindungsgemäßen Demulgatoren zur Trennung von Öl-Wasser-Emulsionen mit einem Wasser- bzw. Salzwassergehalt von 1 bis 98 Gew.-% , besonders bevorzugt 5 bis 97 Gew.-% und ganz besonders bevorzugt 10 bis 95 Gew.-%, verwendet werden. Bei den Ölkomponenten kann es sich um Ölkomponenten beliebiger Herkunft handeln.

Die hyperverzweigten Polyester werden den Öl-Wasser-Emulsionen, insbesondere der Rohölemulsionen, zur Spaltung vorzugsweise in gelöster Form zugesetzt. Dabei haben sich Polymerkonzentrationen in der Lösung von 10 bis 90 Gew. % bewährt. Als Lösemittel bevorzugt verwendet werden unter anderem Wasser, Alkohole wie Methanol, Ethanol, Propanol, Isopropanol, Butanol, Ether wie Tetrahydrofuran oder Dioxan, paraffinische Lösemittel wie Hexan, Cyclohexan, Heptan, Octan, Isooctan oder Leichtbenzinfraktionen, oder aromatische Lösemittel wie Toluol, Xylol oder Solvent Naphtha.

Die Menge (in Gew.-ppm) des oder der erfindungsgemäß verwendeten Polyester, bezogen auf den Ölgehalt der Rohölemulsion, beträgt dabei im Allgemeinen 0,1 ppm bis 5000 ppm vorzugsweise 1 ppm bis 3000 ppm, besonders bevorzugt 2 ppm bis 1000 ppm und speziell 5 ppm bis 500 ppm.

Anlagen und Verfahren zur Spaltung von Rohölemulsionen sind dem Fachmann bekannt. Die Emulsionsspaltung erfolgt dabei üblicherweise vor Ort, d.h. noch auf dem Ölfeld. Es kann sich dabei um eine Anlage an einer Produktionsbohrung handeln oder um eine zentrale Anlage, in welcher für mehrere Produktionsbohrungen eines Ölfeldes zusammen die Spaltung der Rohölemulsionen vorgenommen wird.

Die Spaltung verläuft bereits bei der Temperatur der frisch geförderten Rohölemulsion mit einer solchen Geschwindigkeit ab, dass die Emulsion bereits auf dem Weg zu der Aufbereitungsanlage gespalten werden kann. Diese gebrochene Emulsion wird dann in einem gegebenenfalls beheizten Abscheider und eventuell unter Zuhilfenahme eines elektrischen Feldes in Reinöl und Wasser beziehungsweise Salzwasser getrennt. Bei dem Abscheider kann es sich um Anlagen handeln, welche nur unter dem Einfluss der Schwerkraft separieren, also beispielsweise Absetztanks oder auch um andere Abscheider, wie beispielsweise Hydrozyklone.

Die Trennung der Rohölemulsion erfolgt dabei in der Regel bei 10 - 130°C, bevorzugt bei 40 - 90°C.

Da Rohöle aus einem Gemisch vieler chemischer Verbindungen bestehen, ist es in der Regel erforderlich, aufgrund der unterschiedlichen chemischen Zusammensetzung des Öls, der Wasser- und Salzanteile sowie der konkreten Bedingungen der Emulsionsspaltung, wie Temperatur, Dauer der Emulsionsspaltung, Art der Zudosierung und Wechselwirkungen mit weiteren Komponenten des Gemischs, den Demulgator auf die konkreten Bedingungen abzustimmen. Eine entsprechende Auswahl von hyperverzweigten Polyestern wird je nach dem Trennproblem vom Fachmann vorgenommen. Erfindungsgemäß bewährt haben sich besonders die hyperverzweigten Polyester, insbesondere solche auf Basis von mindestens trifunktionellen Polyetherolen.

Die Anpassung der erfindungsgemäß verwendeten hyperverzweigten Polyester an das jeweilige Trennproblem kann beispielsweise durch entsprechende Auswahl der Monomere oder nachträgliche Funktionalisierung erfolgen. Vorteilhaft können hierzu auch Mischungen verschiedener hyperverzweigter Polyester und/oder Polyesteramide eingesetzt werden. Beispielsweise kann man durch Variation des Verhältnisses hydrophober und hydrophiler Molekülteile eine Serie von Produkten unterschiedlicher Hydrophilie synthetisieren. Die Anpassung an das konkrete Trennproblem kann dann leicht erfolgen, indem man nur das Mengenverhältnis zweier oder mehrerer Polyester verändert.

Weiterhin können die erfindungsgemäß verwendeten hyperverzweigten Polyester selbstverständlich auch in Mischung mit anderen Röhol-Demulgatoren eingesetzt werden. Bei weiteren Rohöldemulgatoren kann es sich beispielsweise oxyalkylierte Phenolformaldehydharze, EO/PO-Blockcopolymere bzw. mit Adipinsäure vernetzte EO/PO-Blockcopolymerere, vernetzte Diepoxide, Polyamide bzw. deren Alkoxylate, Salze der Sulfonsäuren oder ethyoxlierte und/oder propoxylierte Polyethylenimine handeln. Bevorzugt können EO/PO-Blockcopolymere, mit Adipinsäure veresterte EO/PO-Blockcopolymere oder ethoxlierte und/oder propoxylierte Polyethxylenimine eingesetzt werden. Entsprechende Rohöldemulgatoren sind beispielsweise in DE 25 40 173 oder EP 541 018 B1 offenbart. Besonders vorteilhaft können die erfindungsgemäß verwendeten hyperverzweigten Polyester auch mit Proteinen zur Emulsionsspaltung kombiniert

werden, insbesondere mit Hydrophobinen. Nähere Einzelheiten zu Hydrophobinen als Emulsionsspalter sind von WO 2006/103251 offenbart.

Die Erfindung wird anhand der folgenden Beispiele näher erläutert.

Beispiele 5 bis 10, Vergleichsbeispiele 1 bis 4 sowie 11:

Herstellung hyperverzweigter Polyester

In einem Glaskolben, ausgestattet mit Rührer, Innenthermometer und Destillationseinheit wurden Alkenylbemsteinsäurenanhydrid und Alkohol (molares Verhältnis Anhydrid zu Alkohol = 1:1) sowie Dibutylzinn-dilaurat als Katalysator (200 ppm bezogen auf die Masse des Säureanhydrids) vorgelegt, auf 160°C erwärmt und entstehendes Reaktionswasser destillativ abgetrennt. Nach 2 h Rühren wurde dann langsam auf 180°C erhitzt, der Druck auf 40 mbar reduziert und weiteres Reaktionswasser destillativ entfernt. Nach Reaktionsende wurde das Produkt abgekühlt und analysiert.
Die Reaktionszeiten bei 180°C sowie die Einsatzstoffe sind in Tabelle 1 zusammengestellt.

Die erhaltenen Produkte wurden mittels Gelpermeationschromatographie analysiert. Als Laufmittel wurden Tetrahydrofuran oder Dimethylacetamid, als Standard wurde Polymethylmethacrylat (PMMA) verwendet.

Vergleichsbeispiele 12 und 13: Herstellung von Polyesteramiden

In einem Glaskolben, ausgestattet mit Rührer, Innenthermometer und Destillationseinheit wurden Alkenylbernsteinsäurenanhydrid sowie Dibutylzinn-dilaurat als Katalysator (300 ppm bezogen auf die Masse des Säureanhydrids) vorgelegt und auf 60°C erwärmt. Anschließend wurde der Aminoalkohol (molares Verhältnis Anhydrid zu Aminoalohol =1:1) innerhalb von 20 min zugetropft, wobei sich das Gemisch auf 110°C erwärmte. Nach beendeter Zugabe wurde das Reaktionsgemisch auf 150°C erhitzt, der Druck aufgrund von Schaumbildung langsam auf 150 mbar reduziert und das entstehende Reaktionswasser destillativ abgetrennt. Nach 0,5 h Reaktionszeit bei 150°C wurde das Produkt abgekühlt und analysiert. Die Einsatzstoffe sowie die analytischen Daten sind in Tabelle 1 zusammengestellt.

Die erhaltenen Produkte wurden mittels Gelpermeationschromatographie analysiert. Als Laufmittel wurde Tetrahydrofuran, als Standard Polymethylmethacrylat (PMMA) verwendet.

Vergleichsbeispiel 1 a:

Zum Vergleich wurde ein hyperverzweigtes Polycarbonat gemäß Beispiel 1 aus WO 2006/084816 eingesetzt.

Vergleichsbeispiele 2a bis 4a:

Zum Vergleich wurden ein hyperverzweigter Polyester mit Adipinsäure als Dicarbonsäureeinheit, synthetisiert gemäß den Beispielen 12 bis aus WO 2006/084816 eingesetzt.

Tabelle 1: Einsatzstoffe und Endprodukte (- bedeutet: Umsetzung nicht bei 180°C)

| Beispiel | Einsatzstoffe | Reaktionsdauer bei 180°C, [h] | $M_n$ (g/mol] | $M_w$ [g/mol] | $M_w/M_n$ |
|---|---|---|---|---|---|
| V1 | ASA 12 + Glyc | 2 | 1170 | 11100 | 9,5 |
| V2 | ASA 16/18 + Glyc | 4,5 | 3450 | 89000 | 25,8 |
| V3 | ASA 18 + Glyc | 5 | 3850 | 107000 | 27,8 |
| V4 | ASA 18 + TMP | 8 | 3100 | 68800 | 22,2 |
| 5 | ASA 18 + TMP x 3 EO | 4 | 2270 | 41500 | 18,3 |
| 6 | ASA 18 + TMP x 12 EO | 6 | 4100 | 44000 | 10,7 |
| 7 | ASA 18 + TMP x 12 EO | 8 | 3200 | 93200 | 29,1 |
| 8 | ASA 18 + Glyc x 5 EO | 2 | 1830 | 16800 | 9,2 |
| 9 | ASA 18 + Glyc x 5 EO | 3 | 2640 | 31800 | 12,0 |
| 10 | ASA 18 + Glyc x 5 EO | 5 | 4250 | 96000 | 21,2 |
| V11 | ASA 18 + Rizinusöl | 8 | 2700 | 25100 | 9,3 |
| V12 | ASA 18 + Diethanolamin | - | 1000 | 2500 | 2,5 |

(fortgesetzt)

| Beispiel | Einsatzstoffe | Reaktionsdauer bei 180°C, [h] | $M_n$ (g/mol) | $M_w$ [g/mol] | $M_w/M_n$ |
|---|---|---|---|---|---|
| V13 | ASA 18 + Diisopropanolamin | - | 1200 | 3800 | 3,2 |
| V1a | Polycarbonat | - | 2400 | 5400 | 2,3 |
| V2a | Polyester mit Adipinsäure | - | 2900 | 20300 | 7 |
| V3a | Polyester mit Adipinsäure | - | 2100 | 32000 | 15,2 |
| V4a | Polyester mit Adipinsäure | - | 800 | 5900 | 7,4 |

Verzeichnis der Abkürzungen:

| | |
|---|---|
| Glyc | = Glycerin |
| TMP | = Trimethylolpropan |
| EO | = Ethylenoxid |
| Glyc x n EO | = Glycerin, statistisch ethoxyliert mit n Ethylenoxideinheiten |
| TMP x n EO | = Trimethylolpropan, statistisch ethoxyliert mit n Ethylenoxideinheiten |
| ASA 12 | = $C_{12}$-Alkenylbernsteinsäureanhydrid |
| ASA 16/18 | = Gemisch aus $C_{16}$- und $C_{18}$-Alkenylbernsteinsäureanhydrid |
| ASA 18 | = $C_{18}$-Alkenylbernsteinsäureanhydrid |

Test der hyperverzweigten Polymere zum Spalten von Rohöl-Wasser-Emulsionen

Prüfung der Eignung der erfindungsgemäßen Polymere als Demulgator durch Messung der Wasserabspaltung aus einer Rohölemulsion

5 g des zu prüfenden Polymers wurde in einen 100 ml Messkolben eingewogen, dieser mit Xylol / Isopropanol-Gemisch 3:1 (bez. auf Volumen) bis zur Ringmarke aufgefüllt und das Polymer durch Schütteln darin gelöst.

Eine Rohölemulsion der Wintershall AG, Emlichheim, Sonde 87, mit einem Wassergehalt von 55 Vol.-% wurde für ca. 2 h im Wasserbad in einem nicht fest verschlossenen Behälter auf eine Temperatur von 52°C erwärmt.

Die Rohölemulsion wurde ca. 30 sec durch Schütteln homogenisiert, dann wurden jeweils 100 ml der Ölemulsion in 100 ml-Schüttelzylinder gefüllt. Die mit Öl gefüllten Schüttelzylinder wurden in das Wasserbad eingesetzt.

Mit einer Eppendorf - Pipette wurden jeweils 50 $\mu$l der 5 Gew.-%igen Lösung des zu prüfenden Polymers in den Schüttelzylinder mit Rohölemulsion dosiert und der Zylinder mit dem Glasstopfen verschlossen (25 mg Polymer / l Emulsion; ca. 250 ppm). Danach wurde der Schüttelzylinder aus dem Wasserbad heraus genommen, 60 mal geschüttelt und entspannt. Der Schüttelzylinder wurde nun wieder in das Wasserbad gestellt und der Kurzzeitmesser gestartet. Das Volumen des sich nun abscheidenden Wassers wurde nach 10, 20, 30, 60, 120 und 240 min abgelesen. Die Ergebnisse sind in Tabelle 2 zusammengefasst.

| Beispiel Nr. | Wasserabspaltung in ml | | | | | |
|---|---|---|---|---|---|---|
| | 10 min | 20 min | 30 min | 60 min | 120 min | 240 min |
| V1 | 0 | 3 | 14 | 40 | 46 | 50 |
| V2 | 1 | 7 | 25 | 43 | 47 | 51 |
| V3 | 1 | 8 | 26 | 44 | 48 | 51 |
| V4 | 1 | 5 | 14 | 42 | 47 | 50 |
| 5 | 1 | 15 | 24 | 42 | 46 | 50 |
| 6 | 1 | 17 | 29 | 50 | 52 | 54 |
| 7 | 7 | 20 | 34 | 50 | 52 | 54 |
| 8 | 5 | 18 | 30 | 44 | 49 | 52 |
| 9 | 7 | 25 | 44 | 49 | 52 | 54 |
| 10 | 6 | 25 | 43 | 51 | 52 | 54 |
| V11 | 0 | 3 | 4 | 13 | 26 | 38 |
| V12 | 0 | 1 | 3 | 10 | 20 | 33 |
| V13 | 0 | 2 | 4 | 11 | 22 | 37 |
| V1a | 1 | n.b. | 8 | 13 | 28 | 44 |
| V2a | 0 | n.b. | 5 | 13 | 47 | 55 |
| V3a | 2 | n.b. | 8 | 16 | 40 | 54 |
| V4a | 1 | n.b. | 8 | 14 | 34 | 48 |

**Tabelle 2: Ergebnisse der Versuche zur Trennung der Rohölemulsionen**

Die Beispiele und Vergleichsbeispiele zeigen, dass mit den erfindungsgemäß verwendeten hyperverzweigten Polyestern auf Basis von Polyetherolen als Alkoholkomponente. Während die Ergebnisse nach 240 min auch mit hyperverzweigten Polyestern auf Basis von Adipinsäure (Beispiele V2 bis V4) zufriedenstellend sind, weisen die hyperverzweigten Polyester auf Basis substituierter Bernsteinsäuren bei kürzeren Zeiten deutliche Vorteile auf. Bereits nach 10 bzw. 20 min wird ein signifikanter Trennungseffekt erzielt und die Trennung ist bereits nach 60 min weitgehend vollständig.

**Patentansprüche**

1. Verwendung von nicht-dendrimeren, hyperverzweigten Polyestern mindestens umfassend Dicarbonsäureeinheiten (A) sowie als weitere Einheiten mindestens trifunktionelle Alkohole (B1) zum Spalten von Öl-Wasser-Emulsionen, **dadurch gekennzeichnet, dass** die Polymere als Dicarbonsäurebausteine substituierte Bernsteinsäureeinheiten **(I)**

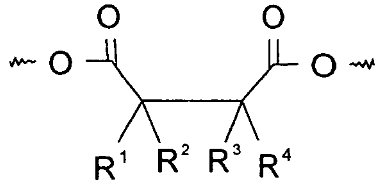

(I)

umfassen, wobei $R^1$, $R^2$, $R^3$ und $R^4$ unabhängig voneinander für H, einen $C_3$ bis $C_{40}$-Alkylrest oder einen $C_3$ bis $C_{40}$-Alkenylrest stehen, mit der Maßgabe, dass mindestens einer der Reste $R^1$, $R^2$, $R^3$ und $R^4$ nicht für H steht, und dass es sich bei den mindestens trifunktionellen Alkoholen (B1) um tri- oder höherfunktionelle Polyetherole, ausgewählt aus der Gruppe von Glycerin, Diglycerin, Triglycerin, Trimethylolethan, Trimethylolpropan, 1,2,4-Butantriol oder Pentaerythrit handelt, wobei die besagten Alkohole im Mittel jeweils mit 1 bis 50 Ethylenoxid- und/oder Propylenoxideinheiten alkoxyliert sind.

2. Verwendung gemäß Anspruch 1, **dadurch gekennzeichnet, dass** zwei oder drei der Reste $R^1$, $R^2$, $R^3$ und $R^4$ für H stehen, und es sich bei den verbleibenden Resten um einen Alkenylrest handelt.

3. Verwendung gemäß Anspruch 2, **dadurch gekennzeichnet, dass** es sich bei $R^1$ und/oder $R^3$ um einen $C_4$ bis $C_{30}$-Alkenylrest handelt.

4. Verwendung gemäß Anspruch 3, **dadurch gekennzeichnet, dass** es sich bei $R^1$ oder $R^3$ um einen Rest ausgewählt aus der Gruppe von n- oder iso-Hexenyl- , n- oder iso-Heptenyl-, n- oder iso-Octenyl-, n- oder iso-Octadienyl-, n- oder iso-No-nenyl-, n- oder iso-Decenyl-, n- oder iso-Dodecenyl-, n- oder iso-Tetradecenyl, n- oder iso-Hexadecenyl-, n- oder iso-Octadecenyl- oder Tetrapropenylresten handelt.

5. Verwendung gemäß Anspruch 3, **dadurch gekennzeichnet, dass** es sich bei $R^1$ und/oder $R^3$ um einen Rest ausgewählt aus der Gruppe von um n- oder iso-Octenyl-, n- oder iso-Dodecenyl-, n- oder iso-Tetradecenyl-, n- oder iso-Hexadecenyl-, n- oder iso-Octadecenyl- oder Tetrapropenylresten handelt.

6. Verwendung gemäß einem der Ansprüche 1 bis 5, **dadurch gekennzeichnet, dass** die mittlere Zahl der Ethylenoxid- und/oder Propylenoxideinheiten 3 bis 30 beträgt.

7. Verwendung gemäß einem der Ansprüche 1 bis 6, **dadurch gekennzeichnet, dass** es sich um Ethylenoxideinheiten handelt.

8. Verwendung gemäß einem der Ansprüche 1 bis 7, **dadurch gekennzeichnet, dass** man die hyperverzweigten Polyester in einer Konzentration von 5 ppm bis 500 ppm bezüglich der zu spaltenden Öl-Wasser-Emulsion einsetzt.

9. Verwendung gemäß einem der Ansprüche 1 bis 8, **dadurch gekennzeichnet, dass** es sich bei der Emulsion um eine Rohölemulsion handelt.

10. Nicht-dendrimere, hyperverzweigte Polyester mindestens umfassend Dicarbonsäureeinheiten (A) sowie als weitere Einheiten mindestens trifunktionelle Alkohole (B1), **dadurch gekennzeichnet dass** die Polymere als Dicarbonsäurebausteine substituierte Bernsteinsäureeinheiten **(I)**

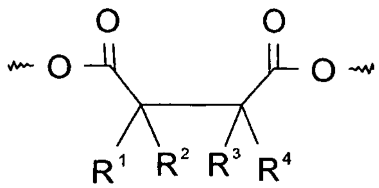

(I)

umfassen, wobei $R^1$, $R^2$, $R^3$ und $R^4$ unabhängig voneinander für H, einen $C_3$ bis $C_{40}$-Alkylrest oder einen $C_3$ bis $C_{40}$-Alkenylrest stehen, mit der Maßgabe, dass mindestens einer der Reste $R^1$, $R^2$, $R^3$ und $R^4$ nicht für H steht, und dass es sich bei den mindestens trifunktionellen Alkoholen (B1) um tri- oder höherfunktionelle Polyetherole, ausgewählt aus der Gruppe von Glycerin, Diglycerin, Triglycerin, Trimethylolethan, Trimethylolpropan, 1,2,4-Butantriol oder Pentaerythrit handelt, wobei die besagten Alkohole im Mittel jeweils mit 1 bis 50 Ethylenoxid- und/oder Propylenoxideinheiten alkoxyliert sind.

11. Nicht-dendrimere, hyperverzweigte Polyester gemäß Anspruch 10, **dadurch gekennzeichnet, dass** zwei oder drei der Reste $R^1$, $R^2$, $R^3$ und $R^4$ für H stehen, und es sich bei den verbleibenden Resten um einen Alkenylrest handelt.

12. Nicht-dendrimere, hyperverzweigte Polyester gemäß Anspruch 11, **dadurch gekennzeichnet, dass** es sich bei $R^1$ und/oder $R^3$ um einen $C_4$ bis $C_{30}$-Alkenylrest handelt.

13. Nicht-dendrimere, hyperverzweigte Polyester gemäß Anspruch 12, **dadurch gekennzeichnet, dass** es sich bei $R^1$ und/oder $R^3$ um einen Rest ausgewählt aus der Gruppe von n- oder iso-Hexenyl- , n- oder iso-Heptenyl-, n- oder

iso-Octenyl-, n- oder iso-Octadienyl-, n- oder iso-Nonenyl-, n- oder iso-Decenyl-, n- oder iso-Dodecenyl-, n- oder iso-Tetradecenyl, n- oder iso-Hexadecenyl-, n- oder iso-Octadecenyl- oder Tetrapropenylresten handelt.

**14.** Nicht-dendrimere, hyperverzweigte Polyester gemäß Anspruch 12, **dadurch gekennzeichnet, dass** es sich bei $R^1$ und/oder $R^3$ um einen Rest ausgewählt aus der Gruppe von um n- oder iso-Octenyl-, n- oder iso-Do-decenyl-, n- oder iso-Tetradecenyl-, n- oder iso-Hexadecenyl-, n- oder iso-Oc-tadecenyl- oder Tetrapropenylresten handelt.

**15.** Nicht-dendrimere, hyperverzweigte Polyester gemäß einem der Ansprüche 10 bis 14, **dadurch gekennzeichnet, dass** die mittlere Zahl der Ethylenoxid- und/oder Propylenoxideinheiten 3 bis 30 beträgt.

## Claims

**1.** The use of nondendrimeric hyperbranched polyesters at least comprising dicarboxylic acid units (A) and, as further units, at least trifunctional alcohols (B1) for splitting oil-water emulsions, wherein the polymers comprise, as dicarboxylic acid units, substituted succinic acid units (I)

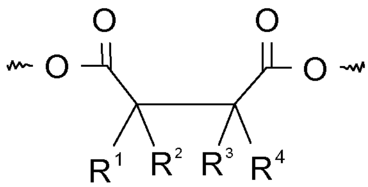 (I)

where $R^1$, $R^2$, $R^3$ and $R^4$ are each independently H, a $C_3$- to $C_{40}$-alkyl radical or a $C_3$- to $C_{40}$-alkenyl radical, with the proviso that at least one of the $R^1$, $R^2$, $R^3$ and $R^4$ radicals is not H, and the at least trifunctional alcohols (B1) are trifunctional or higher-functionality polyetherols selected from the group of glycerol, diglycerol, triglycerol, trimethylolethane, trimethylolpropane, 1,2,4-butanetriol and pentaerythritol, said alcohols having been alkoxylated with an average in each case of from 1 to 50 ethylene oxide and/or propylene oxide units.

**2.** The use according to claim 1, wherein two or three of the $R^1$, $R^2$, $R^3$ and $R^4$ radicals are H, and the remaining radicals are each alkenyl radicals.

**3.** The use according to claim 2, wherein $R^1$ and/or $R^3$ is a $C_4$- to $C_{30}$-alkenyl radical.

**4.** The use according to claim 3, wherein $R^1$ or $R^3$ is a radical selected from the group of n- or isohexenyl, n- or isoheptenyl, n- or isooctenyl, nor isooctadienyl, n- or isononenyl, n- or isodecenyl, n- or isododecenyl, n- or isotetradecenyl, n- or isohexadecenyl, n- or isooctadecenyl or tetrapropenyl radicals.

**5.** The use according to claim 3, wherein $R^1$ and/or $R^3$ is a radical selected from the group of n- or isooctenyl, n- or isododecenyl, n- or isotetradecenyl, n- or isohexadecenyl, n- or isooctadecenyl or tetrapropenyl radicals.

**6.** The use according to any of claims 1 to 5, wherein the mean number of ethylene oxide and/or propylene oxide units is from 3 to 30.

**7.** The use according to any of claims 1 to 6, wherein the units are ethylene oxide units.

**8.** The use according to any of claims 1 to 7, wherein the hyperbranched polyesters are used in a concentration of from 5 ppm to 500 ppm based on the oil-water emulsion to be split.

**9.** The use according to any of claims 1 to 8, wherein the emulsion is a crude oil emulsion.

**10.** A nondendrimeric hyperbranched polyester at least comprising dicarboxylic acid units (A) and, as further units, at least trifunctional alcohols (B1), wherein the polymers comprise, as dicarboxylic acid units, substituted succinic acid units (I)

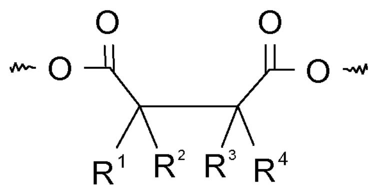

(I)

where $R^1$, $R^2$, $R^3$ and $R^4$ are each independently H, a $C_3$- to $C_{40}$-alkyl radical or a $C_3$- to $C_{40}$-alkenyl radical, with the proviso that at least one of the $R^1$, $R^2$, $R^3$ and $R^4$ radicals is not H, and the at least trifunctional alcohols (B1) are trifunctional or higher-functionality polyetherols selected from the group of glycerol, diglycerol, triglycerol, trimethylolethane, trimethylolpropane, 1,2,4-butanetriol and pentaerythritol, said alcohols having been alkoxylated with an average in each case of from 1 to 50 ethylene oxide and/or propylene oxide units.

**11.** A nondendrimeric hyperbranched polyester according to claim 10, wherein two or three of the $R^1$, $R^2$, $R^3$ and $R^4$ radicals are H, and the remaining radicals are each alkenyl radicals.

**12.** A nondendrimeric hyperbranched polyester according to claim 11, wherein $R^1$ and/or $R^3$ is a $C_4$- to $C_{30}$-alkenyl radical.

**13.** A nondendrimeric hyperbranched polyester according to claim 12, wherein $R^1$ and/or $R^3$ is a radical selected from the group of n- or isohexenyl, n- or isoheptenyl, n- or isooctenyl, n- or isooctadienyl, n- or isononenyl, n- or isodecenyl, n- or isododecenyl, n- or isotetradecenyl, n- or isohexadecenyl, n- or isooctadecenyl or tetrapropenyl radicals.

**14.** A nondendrimeric hyperbranched polyester according to claim 12, wherein $R^1$ and/or $R^3$ is a radical selected from the group of n- or isooctenyl, n- or isododecenyl, n- or isotetradecenyl, n- or isohexadecenyl, n- or isooctadecenyl or tetrapropenyl radicals.

**15.** A nondendrimeric hyperbranched polyester according to any of claims 10 to 14, wherein the mean number of ethylene oxide and/or propylene oxide units is from 3 to 30.

**Revendications**

**1.** Utilisation de polyesters hyper-ramifiés non dendrimères, au moins comportant des motifs acide dicarboxylique (A) ainsi que comme autres motifs des alcools au moins trifonctionnels (B1), pour la rupture d'émulsions huile-eau, **caractérisée en ce que** les polymères comprennent comme composants acide dicarboxylique des motifs acide succinique substitués (I)

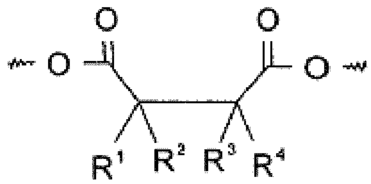

(I)

dans lesquels $R^1$, $R^2$, $R^3$ et $R^4$ représentent indépendamment les uns des autres H, un radical alkyle en $C_3$-$C_{40}$ ou un radical alcényle en $C_3$-$C_{40}$, étant entendu qu'au moins l'un des radicaux $R^1$, $R^2$, $R^3$ et $R^4$ ne représente pas H, et que les alcools au moins trifonctionnels (B1) consistent en des polyétherols trifonctionnels ou à plus haute fonctionnalité, choisis dans le groupe constitué par le glycérol, le diglycérol, le triglycérol, le triméthyloléthane, le triméthylolpropane, le 1,2,4-butanediol ou le pentaérythritol, lesdits alcools étant alcoxylés en moyenne chacun par 1 à 50 unités oxyde d'éthylène et/ou oxyde de propylène.

**2.** Utilisation selon la revendication 1, **caractérisée en ce que** deux ou trois des radicaux $R^1$, $R^2$, $R^3$ et $R^4$ représentent H, et le/les radical(caux) restant(s) consiste(nt) en un radical alcényle.

**3.** Utilisation selon la revendication 2, **caractérisée en ce que** $R^1$ ou $R^3$ consiste en un radical alcényle en $C_4$-$C_{30}$.

4. Utilisation selon la revendication 3, **caractérisée en ce que** $R^1$ ou $R^3$ consiste en un radical choisi dans le groupe constitué par les radicaux n- ou iso-hexényle, n- ou iso-heptényle, n- ou iso-octényle, n- ou iso-octadiényle, n- ou iso-nonényle, n- ou iso-décényle, n- ou iso-dodécényle, n- ou iso-tétradécényle, n- ou iso-hexadécényle, n- ou iso-octadécényle ou tétrapropényle.

5. Utilisation selon la revendication 3, **caractérisée en ce que** $R^1$ et/ou $R^3$ consiste(nt) en un radical choisi dans le groupe constitué par les radicaux n- ou iso-octényle, n- ou iso-dodécényle, n- ou iso-tétradécényle, n- ou iso-hexadécényle, n- ou iso-octadécényle ou tétrapropényle.

6. Utilisation selon l'une quelconque des revendications 1 à 5, **caractérisée en ce que** le nombre moyen des unités oxyde d'éthylène et/ou oxyde de propylène vaut de 3 à 30.

7. Utilisation selon l'une quelconque des revendications 1 à 6, **caractérisée en ce qu'**il s'agit d'unités oxyde d'éthylène.

8. Utilisation selon l'une quelconque des revendications 1 à 7, **caractérisée en ce qu'**on utilise les polyesters hyper-ramifiés à une concentration de 5 ppm à 500 ppm par rapport à l'émulsion huile-eau à rompre.

9. Utilisation selon l'une quelconque des revendications 1 à 8, **caractérisée en ce que** l'émulsion consiste en une émulsion de pétrole brute.

10. Polyesters hyper-ramifiés non dendrimères, au moins comportant des motifs acide dicarboxylique (A) ainsi que comme autres motifs des alcools au moins trifonctionnels (B1), **caractérisés en ce que** les polymères comprennent comme composants acide dicarboxylique des motifs acide succinique substitués (I)

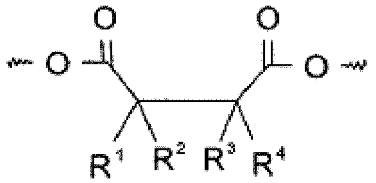

(I)

dans lesquels $R^1$, $R^2$, $R^3$ et $R^4$ représentent indépendamment les uns des autres H, un radical alkyle en $C_3$-$C_{40}$ ou un radical alcényle en $C_3$-$C_{40}$, étant entendu qu'au moins l'un des radicaux $R^1$, $R^2$, $R^3$ et $R^4$ ne représente pas H, et que les alcools au moins trifonctionnels (B1) consistent en des polyétherols trifonctionnels ou à plus haute fonctionnalité, choisis dans le groupe constitué par le glycérol, le diglycérol, le triglycérol, le triméthyloléthane, le triméthylolpropane, le 1,2,4-butanediol ou le pentaérythritol, lesdits alcools étant alcoxylés en moyenne chacun par 1 à 50 unités oxyde d'éthylène et/ou oxyde de propylène.

11. Polyesters hyper-ramifiés non dendrimères selon la revendication 10, **caractérisés en ce que** deux ou trois des radicaux $R^1$, $R^2$, $R^3$ et $R^4$ représentent H, et les radicaux restants consistent en un radical alcényle.

12. Polyesters hyper-ramifiés non dendrimères selon la revendication 11, **caractérisés en ce que** $R^1$ et/ou $R^3$ consiste (nt) en un radical alcényle en $C_4$-$C_{30}$.

13. Polyesters hyper-ramifiés non dendrimères selon la revendication 12, **caractérisés en ce que** $R^1$ et/ou $R^3$ consiste (nt) en un radical choisi dans le groupe constitué par les radicaux n- ou iso-hexényle, n- ou iso-heptényle, n- ou iso-octényle, n- ou iso-octadiényle, n- ou iso-nonényle, n- ou iso-décényle, n- ou iso-dodécényle, n- ou iso-tétradécényle, n- ou iso-hexadécényle, n- ou iso-octadécényle ou tétrapropényle.

14. Polyesters hyper-ramifiés non dendrimères selon la revendication 12, **caractérisés en ce que** $R^1$ et/ou $R^3$ consiste (nt) en un radical choisi dans le groupe constitué par les radicaux n- ou iso-octényle, n- ou iso-dodécényle, n- ou iso-tétradécényle, n- ou iso-hexadécényle, n- ou iso-octadécényle ou tétrapropényle.

15. Polyesters hyper-ramifiés non dendrimères selon l'une quelconque des revendications 10 à 14, **caractérisés en ce que** le nombre moyen des unités oxyde d'éthylène et/ou oxyde de propylène vaut de 3 à 30.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0264841 A
- EP 0499068 A
- US 5460750 A
- EP 0541018 A
- EP 0784645 A
- EP 0267517 A
- US 4507466 A
- US 4857599 A
- US 4568737 A
- DE 10329723
- WO 2006084816 A
- WO 9723474 A
- DE 19519042
- WO 0146296 A
- DE 10163163
- DE 10219508
- DE 10240817
- WO 9916810 A
- DE 2540173
- EP 541018 B1
- WO 2006103251 A


### In der Beschreibung aufgeführte Nicht-Patentliteratur


- **H. FREY et al.** *Acta Polym.,* 1997, vol. 48, 30
- **P.J. FLOR.** *J. Am. Chem. Soc.,* 1952, vol. 74, 2718
- **H. FREY et al.** *Chem. Eur. J.,* 2000, vol. 6 (14), 2499
- *Die Methode ist im Analytiker Taschenbuch,* 1984, vol. 4, 433-442